# EUROPEAN PATENT APPLICATION

(11) **EP 1 796 319 A1**
(43) Date of publication of application: **13.06.2007**
(21) Application number: 05292665.6
(22) Date of filing: 08.12.2005
(51) Int. Cl.: H04L 12/56

(54) **Method to preserve the order of packets of a same flow and transmitted either through a control plane or through a data plane of a telecommunication network element**

(71) Applicant: Alcatel Lucent, 75008 Paris (FR)
(72) Inventor: Boucque, Steven Gerard, 8630 Veurne (BE); Beck, Michaël Andries Tomas, 2170 Merksem (Antwerp) (BE); Borghs, Eric Farans Elisa, 2440 Geel (BE); Cautereels, Paul Henri Marie, 2880 Hingene (BE); Renaux, Patrick Albert Paul, 1050 Brussels (BE)
(74) Representative: Narmon, Gisèle Marie Thérèse

(57) **Abstract**

A method to preserve the ordering of data packets of a same flow (P1-P4, P7, P8) passing either through a control plane (CP) or through a data plane (DP) of a telecommunication network element. The method comprises the step of, when the control plane starts processing the new flow, the control plane controls the data plane to latch any other packet belonging to this flow by sending a first control packet (C1) to said data plane. When the processing is completed, the control plane controls the data plane to release the latched packets by sending a second control packet (C3) to said data plane. The present method is particularly applicable to Ethernet frames, where it is also not allowed to reorder frames belonging to a same 'Ethernet flow'.

## Description

The present invention relates to a method to preserve the ordering of data packets of a same flow passing either through a control plane or through a data plane of a telecommunication network element.

In such a known telecommunication network element, data packets of a same flow are generally received at an input of the data plane. They are then either routed to the control plane to be processed therein or remain in the data plane and are routed towards the output thereof. At the output of the control plane, the packets are returned to the data plane where they are merged within the flow transmitted through this data plane. As the packets of a same flow don't follow a same route, i.e. via the control plane or via the data plane, their order may be affected at the merging output of the data plane.

The problem is to rearrange, at the output of the data plane, the order of the packets of a same flow as it was at the input of this data plane.

A possible handling of the problem of packet reordering is just to ignore it, and let higher layer protocols handle this problem.

This solution will typically lead to retransmitting many packets and a drawback thereof is the overhead created on the telecommunication network element. Furthermore, the resulting delay will cause timeouts, leading to the retransmission of even more packets. This is thus not a future-safe solution.

Another possibility is to perform a reordering of the packets as they arrived at the data plane. However, such a reordering gives rise to relatively complex algorithms and corresponding circuitry.

Furthermore, in case of Ethernet frames, it is also not allowed to reorder frames belonging to a same 'Ethernet flow'.

An object of the present invention is to provide a method to preserve the ordering of data packets of a same flow during their transmission through the control plane or the data plane.

According to the invention, this object is achieved due to the fact that said method comprises the step of, when the control plane starts processing said flow, said control plane controls the data plane to latch any packet belonging to said flow until said processing is completed, and that, when said processing is completed, said control plane controls said data plane to release the latched packets.

This mechanism stalls the data packets of the data path. The stalling or latching, e.g. storing the data packets in a queue, is under complete control of the control plane. Once the control plane starts processing, it controls the data plane to queue any packet related to the flow where it is working on. Once the processing is done in the control plane, the possible queue that was build up in this control plane is emptied and the data plane is then directed to empty its own queue. From this moment on traffic only passes through the data plane. In this way, the preservation of the packet order is achieved.

Another characterizing embodiment of the present invention is that said control plane starts processing said flow by receiving a first packet of said flow from said data plane.

This first packet triggers the control plane to control the data plane to start latching any packet belonging to the same flow.

Also another characterizing embodiment of the present invention is that said control plane controls the data plane to start latching said packets by sending a first control packet to said data plane.

Since the packets are latched their order can easily be preserved.

Still another characterizing embodiment of the present invention is that said control plane controls the data plane to release the latched packets by sending a second control packet to said data plane.

The packets latched in the data plane are released after the last packet transmitted through the control plane has passed the output of this control plane. The order of the packets is so preserved.

Yet another characterizing embodiment of the present invention is that said control plane and said data plane have different processing speeds.

The processing speed of the control plane and that of the data plane may either be equal or different, this has no effect on the efficiency of the present method.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

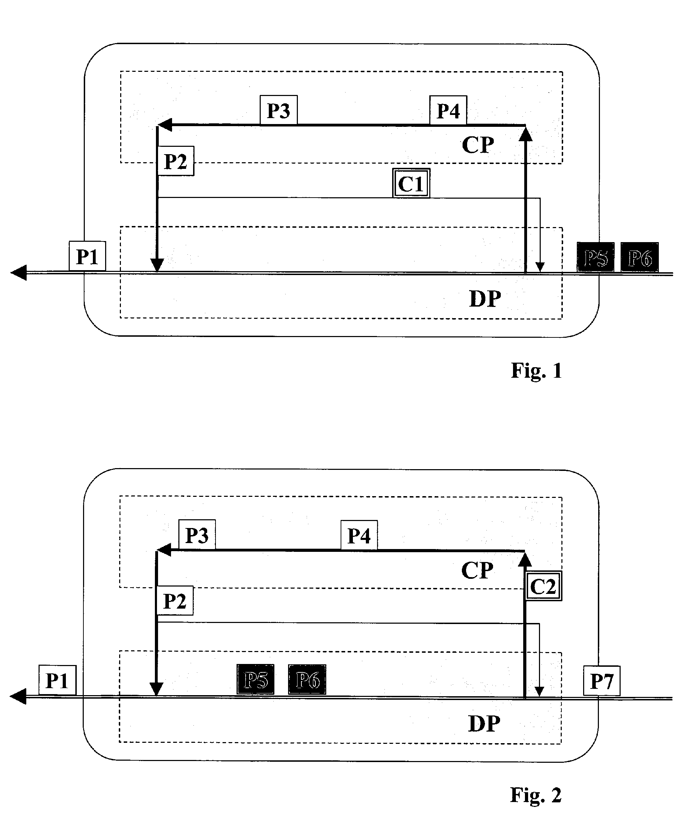

The above and other objects and features of the invention will become more apparent and the invention itself will be best understood by referring to the following description of an embodiment taken in conjunction with the accompanying drawings wherein the Figs. 1 to 4 represent successive steps of the method according to the invention.

The different Figs. 1 to 4 all represent a network element of a telecommunication network. The network element comprises the parallel coupling of a data plane DP and a control plane CP through which packets of data are transmitted. The data packets generally arrive at an input of the data plane DP (at the right on Fig. 1). From there, they are then either routed to the control plane CP in order to be processed therein, or they remain into the data plane wherein they are routed towards an output thereof (at the left on Fig. 1). The output of the control plane is coupled to the output of the data plane where the packets coming from this control plane are merged with the packets transmitted through the data plane. As the packets of a same flow, preferably an Ethernet flow, don't follow a same route, i.e. via the control plane or via the data plane, and that, additionally, the control plane and the data plane may have a different processing speed, the order of arrival of the packets at the output of the data plane could be different from the order at the input of this data plane.

The method described below allows preserving the order of packets P1, P2, P3, P4, P7, P8 belonging to a same flow and transmitted through either a control plane or a data plane that may even have a different packet processing speed. In the following example, the packets P5, P6, P9 and P10 belong to other flows.

When the data plane DP detects packets P1-P4 coming in, not belonging to an existing known flow, these packets are directed from the input of DP to the control plane CP, as shown at Fig. 1.

Upon the reception of a first packet P1 of this new flow, the control plane CP generates a control packet C1 that is injected into the data path, i.e. in the data plane DP at a location before the injection point of the data packets from DP to CP (at the right in Fig 1). The control packet C1 then follows the normal data flow through the data plane DP, but it is also mirrored as another control packet C2 back to the control plane CP. This second control packet C2 indicates to the control plane CP that the packet P4, sent by DP to CP just before this control packet C2, was the last packet of the flow that was directed to the control plane CP, as shown at Fig. 2.

When the control packet C1 arrives, in the data plane DP, at an output point where the data packets from the control plane CP are injected back into the data plane DP, at the left in Fig. 2, the flow configuration in the data plane DP is updated with the information contained in control packet C1.

Packets P1 to P4 were already directed to the control plane before the configuration of the data plane DP was updated by the control packet C1. The following data packets P7 and P8 of the same flow as P1-P4 but following the arrival of C1 in DP are put in a halting queue, i.e. are latched, in the data plane DP. Packets, such as P5-P6, belonging to other flows are not affected by this halting queue and pass through the data plane DP via a possible standard active data plane queue.

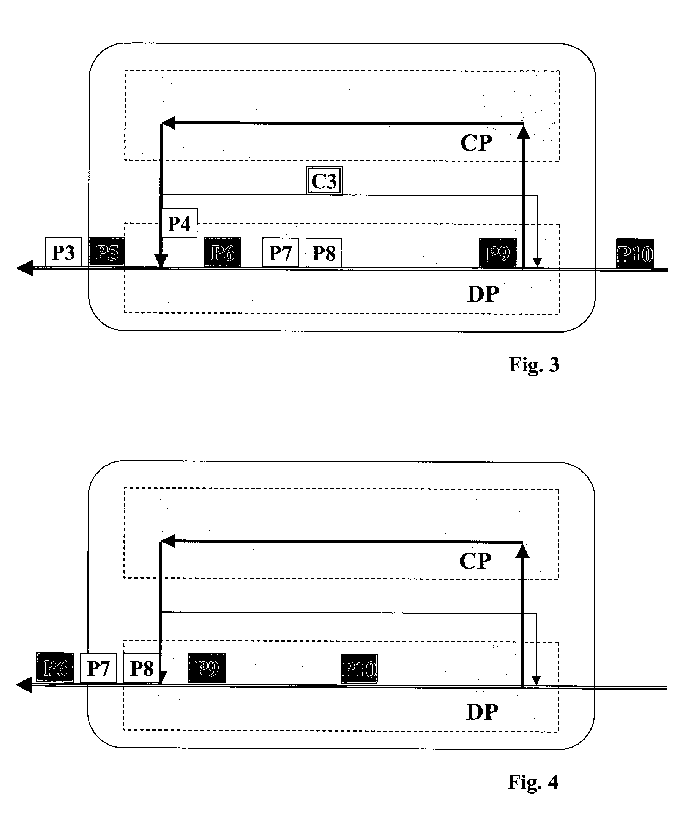

Once the control packet C2, that was mirrored to the control plane CP, is processed by CP, this control plane generates a third control packet C3, which is sent to the input of the data plane DP. This control packet C3 indicates that all packets P1-P4 that were directed to the control plane CP, have been processed thereby, as shown at Fig. 3. The control packet C3 also indicates to the data plane DP that all packets P1-P4 of that flow are released by the control plane CP.

When the control packet C3 arrives in the data plane DP, the halting queue thereof is linked to the active data plane queue containing for instance packets P9 and P10. In other words, when the halting queue P7-P8 of the data plane DP is emptied, the normal operation restarts for the following packets P9-P10, as shown at Fig. 4.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to preserve the ordering of data packets (P1-P4, P7, P8) of a same flow passing either through a control plane (CP) or through a data plane (DP) of a telecommunication network element,
***characterized in that*** said method comprises the step of, when the control plane (CP) starts processing said flow, said control plane controls (C1) the data plane (DP) to latch any packet belonging to said flow until said processing is completed,
*and **in that**,* when said processing is completed, said control plane controls (C3) said data plane (DP) to release the latched packets.

2. The method according to claim 1, ***characterized in that*** said control plane (CP) starts processing said flow by receiving a first packet (P1) of said flow from said data plane (DP).

3. The method according to claim 1, ***characterized in that*** said control plane (CP) controls the data plane (DP) to start latching said packets by sending a first control packet (C1) to said data plane.

4. The method according to claim 1, ***characterized in that*** said control plane (CP) controls the data plane (DP) to release the latched packets by sending a second control packet (C3) to said data plane.

5. The method according to claim 1, ***characterized in that*** said flow is an Ethernet flow.

6. The method according to claim 1, ***characterized in that*** said control plane (CP) and said data plane (DP) have different processing speeds.
